## Europäisches Patentamt
## European Patent Office
## Office européen des brevets

(19)

(11) Veröffentlichungsnummer: **0 002 479**
**B1**

(12) **EUROPÄISCHE PATENTSCHRIFT**

(45) Veröffentlichungstag der Patentschrift: **12.01.83**

(21) Anmeldenummer: **78101538.3**

(22) Anmeldetag: **04.12.78**

(51) Int. Cl.³: **G 11 B 15/66,**
**G 11 B 15/29, B 65 H 17/20**

(54) Lade/Entlade-Einrichtung für eine Bandkassette, insbesondere eine Magnetbandkassette.

(30) Priorität: **08.12.77 US 858634**

(43) Veröffentlichungstag der Anmeldung:
**27.06.79 Patentblatt 79/13**

(45) Bekanntmachung des Hinweises auf die Patenterteilung:
**12.01.83 Patentblatt 83/2**

(84) Benannte Vertragsstaaten:
**BE CH DE FR GB IT NL SE**

(56) Entgegenhaltungen:
**FR - A - 2 255 674**
**US - A - 3 432 169**
**US - A - 3 980 253**
**US - A - 4 023 748**

(73) Patentinhaber: **BASF Aktiengesellschaft**
**Carl-Bosch-Strasse 38**
**D-6700 Ludwigshafen (DE)**

(72) Erfinder: **Cary, Paul D.**
**16371 Hemlock Street**
**Fountain Valley California 92708 (US)**

Courier Press, Leamington Spa, England.

## Lade/Entlade-Einrichtung für eine Bandkassette, insbesondere eine Magnetbandkassette

Die Erfindung betrifft eine Lade/Entlade-Einrichtung für eine Bandkassette, insbesondere eine Magnetbandkassette, die zum Betrieb mit einem Bandkassetten-Laufwerk geöffnet wird, wobei das Laufwerk eine Antriebsrolle, ein Aufwickelrolle und eine Abwickelrolle sowie Öffnungseinrichtungen für die Kassette umfaßt und wobei zumindest die Abwickelrolle auf einem schwenkbaren Träger angeordnet ist und mittels einer Bewegungsvorrichtung die Abwickelrolle auf dem schwenkbaren Träger zwischen der Ladestellung innerhalb der Kassette und der Arbeitsstellung in Berührung mit der Antriebsrolle entlang einer bogenförmigen Bahn bewegt wird.

Die Erfindung betrifft ganz allgemein Bandkassetten-Laufwerke und insbesondere Verbesserungen an Kassettenladevorrichtungen zum Einsatz in derartigen Laufwerken.

Ein Beispiel für eine Magnetbandkassetten-Ladeeinrichtung dieses Typs ist im US—Patent 4 023 748 beschrieben. Die bekannte Ladeeinrichtung wird im Einsatz mit einem Bandlaufwerk gezeigt, das eine Antriebsrolle, eine Aufwickelrolle und einen Abwickelrollenträger umfaßt. Die Ladeeinrichtung nimmt eine Schwenkkassette mit einer Abwickelrolle auf und bringt die Nabe der Abwickelrolle in Eingriff mit dem Abwickelrollenträger. Der Lademechanismus enthält Einrichtungen zum Öffnen der Kassette und zum gleichzeitigen Vorschub der Abwickelrolle zur Antriebsrolle, wodurch ihre Umfangsfläche mit derjenigen der drehenden Antriebsrolle in Berührung kommt, so daß das Magnetband von der Abwickelrolle auf die Aufwickelrolle transportiert wird.

Auf- und Abwickelrollen sind jeweils auf einem gegenüber der Antriebsrolle schwenkbaren Träger angeordnet.

Infolge der speziellen Lagerung von Öffnungshebeln, die das Auseinanderschwenken der Kassettenhälften bewerkstelligen, wird beim Schwenkvorgang die Kassette eine kurze Strecke in Richtung ihrer Symmetrieachse verschoben.

Ein wesentlicher Nachteil tritt auf, wenn die bekannte Einrichtung bei Bandkassetten-Laufwerken verwendet wird, bei denen sich die Kassette nur bis zu einer Grenze öffnen läßt und die Abwickelrolle nicht nur in Richtung zur Antriebsrolle, sondern auch über einen Weg seitlich zu dieser Richtung (also auf einer Kurvenbahn) verschoben wird. Die bekannten Einrichtungen funktionieren nicht einwandfrei, da wegen der von der nach vorne bewegten Abwickelrolle beschriebenen Kurvenbahn die Rolle durch die offene Kassette selbst mechanisch behindert wird, was auch durch oben erwähnte kurze Zwangsverschiebung der Kassette beim Öffnungsvorgang nicht vermieden wird. Bisher war diese Behinderung nur vermeidbar, wenn Abwickelrollen mit wesentlich kleinerem Durchmesser benutzt werden als es der Kassettengröße entsprach.

Vorliegender Erfindung liegt daher die Aufgabe zugrunde, eine Kassetten-Lade/Entlade-Einrichtung bereitzustellen, mit der eine innerhalb der Kassette bifindliche Bandrolle in sicheren Eingriff mit dem Laufwerksantrieb gebracht, wird, die Kassette geöffnet und die Bandrolle zur Antriebsrolle bewegbar ist, ohne daß diese Vorgänge durch die Kassette selbst behindert werden.

Die Erfindung betrifft eine Lade/Entlade-Einrichtung für eine Bandkassette, insbesondere eine Magnetbandkassette, die zum Betrieb mit einem Bandkassetten-Laufwerk geöffnet wird, wobei das Laufwerk eine Antriebsrolle, eine Aufwickelrolle und eine Abwickelrolle sowie Öffnungseinrichtungen für die Kassette umfaßt und wobei zumindest die Abwickelrolle auf einem schwenkbaren Träger angeordnet ist und mittels einer Bewegungsvorrichtung die Abwickelrolle auf dem schwenkbaren Träger zwischen der Ladestellung innerhalb der Kassette und der Arbeitsstellung in Berührung mit der Antriebsrolle entlang einer bogenförmigen Bahn bewegt wird, und wobei in dieser Einrichtung erfindungsgemäß eine Verlagerungsvorrichtung vorgesehen ist, mittels der die Kassette auf dem Weg der Abwickelrolle zwischen Ladestellung und Arbeitsstellung in senkrechter Richtung zur Verbindungsgeraden der Mittelpunkte der Abwickelrolle in Ladestellung und der Antriebsrolle verschiebbar ist.

Die Erfindung ergibt den Vorteil, daß sie die Verwendung einer Magnetbandrolle mit maximalem Durchmesser in einer Magnetbandkassette von minimalen Abmessungen gestattet, ohne daß es zu einer Behinderung zwischen Rolle und Kassette kommen kann.

Da die Abwickelrolle bei ihrer Bewegung zur Antriebsrolle hin oder davon zurück eine bogenförmige Bahn beschreibt, ist die Bewegungsbahn in zwei Komponenten zerlegbar, und die Kassette kann daher in zwei Richtungen bewegt werden. In welcher von diesen beiden Richtungen die Kassette jeweils bewegt werden muß, hängt von ihrer Lage gegenüber der Lage der Antriebsrolle ab.

Obwohl sich die Einrichtung der vorliegenden Erfindung bei jeder Kassettenart verwenden läßt, die zu öffnen bzw. schließbar ist, eignet sie sich speziell zum Gebrauch mit einer Schwenkkassette.

Die Erfindung betrifft in dieser speziellen Ausführung eine Lade/Entlade-Einrichtung, bei der die Kassette aus zwei auseinanderschwenkbaren Teilen besteht, zwischen denen nach Auseinanderschwenken in Draufsicht eine V-Öffnung entsteht, wobei erfindungsgemäß die Verlagerungsvorrichtung mit Öffnungseinrichtungen versehen ist, die die Teile der Kassette gleichzeitig mit der von der Abwickelrolle durchgeführten Bewegung in die Arbeitsstellung in die Offenstellung auseinanderschwenken.

In weiterer Ausbildung der Erfindung kann die Kassette mittels der Verlagerungsvorrichtung in einer im wesentlichen seitlichen Richtung relativ zu der zur Antriebsrolle hinführenden Bewegungsrichtung verschoben werden, wodurch auch die V-Öffnung der Kassette in Richtung der seitlichen Komponente der Bewegungsbahn der Abwickelrolle parallel verschoben wird und wodurch mechanischer Kontakt zwischen Abwickelrolle und Kassette vermieden wird.

Dadurch wird eine Zwangsverlagerung der Kassetten-V-Öffnung erreicht, so daß diese der Antriebsrolle gegenüber zu liegen kommt und ein problemloses Heranführen der Abwickelrolle erhalten wird.

Eine Bewegung der Kassette in der von der Abwickelrolle eingeschlagenen Richtung kann sich als notwendig erweisen, wenn die Öffnung in der Kassette nicht auf die Antriebsrolle ausgerichtet ist, und die Kassette um etwa 90° bezüglich ihrer oben erwähnten Lage gedreht wird.

In praktischer Ausgestaltung können die Einrichtungen für die Kassettenöffnung und die Bewegungs- und Verlagerungsvorrichtungen miteinander gleichzeitig koppelbar und gleichzeitig betätigbar sein und der über die Verlagerungsvorrichtungen bewirkte Kassettenverschiebungsweg kann dem seitlichen Versatz der Abwickelrollenbewegungsbahn im wesentlichen angepaßt sein.

In weiterer vorteilhafter Ausbildung der Erfindung können die Öffnungseinrichtung und die Verlagerungsvorrichtung für die Kassette erste und zweite Schwenkhebel umfassen, die mit entgegengesetzten Teilen der Schwenkkassette in Eingriff kommen und zur Öffnung der Kassette relativ zueinander beweglich sind, wobei die Schwenkhebel jeweils ein Kopplungsende aufweisen; und daß Vorrichtungen zur Kopplung der jeweiligen Enden der ersten und zweiten Schwenkhebel vorgesehen sind, wobei der erste und der zweite Schwenkhebel relativ zueinander aus einer geschlossenen Stellung, in der die Kassette geschlossen gehalten wird, in eine offene Stellung, in der die V-Öffnung der Kassette offen gehalten wird, bewegbar sind, wobei die entstandene V-Öffnung gleichzeitig um einen vorgegebenen Weg in einer Richtung verschoben wird, senkrecht zur Verbindungsgeraden der Mittelpunkte der Abwickelrolle und der Antriebsrolle.

Es können ferner zweckmäßige Führungseinrichtungen, welche jeden dieser Hebel zwischen der Schließ- und Offenstellung der Kassette einen vorgegebenen Weg entlangführen, sowie Steuereinrichtungen vorgesehen sein, über die die ersten und zweiten Schwenkhebel automatisch zwischen der Schließund Offenstellung bewegbar sind.

Die Schwenk- und Seitenbewegung der Schwenkhebel zum gleichzeitigen Öffnen der Kassette und problemlosen Vorschub der Abwickelrolle kann über Steuereinrichtungen erreicht werden, die beispielsweise eine Führungsmuttereinheit mit Motorantrieb und einen schwenkbar angeordneten Steuerhebel umfassen. Die genaue Bewegung des Schwenkhebels wird über Führungsschlitze bestimmt, die mit an den Schwenkhebeln vorgesehenen herausragenden Stiften zusammenwirken. Die Führungsmutter und der Steuerhebel bestimmen auch die Bewegung des Abwickelrollenträgers beim Vorschub der Abwickelrolle auf ihrer vorgegebenen Bewegungsbahn bis zur Berührung der Antriebsrolle.

Weitere Merkmale der Erfindung kennzeichnen praktische Ausbildungen der Steuereinrichtungen im einzelnen.

Die Lade/Entlade-Einrichtung kann zweckmäßigerweise auch Detektoreinheiten zum Feststellen des Betriebszustandes der Kassette und der Antriebsrollen enthalten, die z.B. Signale liefern, wenn die Abwickelrolle mit der Antriebsrolle in Berührung kommt. Dadurch wird die korrekte Steuerung des Führungsmuttermotors erleichtert und der richtige Ablauf der gesamten Vorgänge des Bandlaufwerks wird steuerbar.

Der oben zumeist betrachtete Vorgang des Ladens ist umkehrbar, beim Entladen kehrt die Abwickelrolle in die Kassette zurück und die Kassette wird geschlossen und in ihre ursprüngliche Lage gebracht, von der aus sie aus der Einrichtung entnommen, z.B. ausgestoßen, werden kann.

Zweckmäßig kann gemäß Erfindung eine Auswurfvorrichtung vorgesehen sein, die mechanisch durch Organe gesteuert, erst dann betätigbar ist, wenn die Kassette geschlossen ist.

Weitere Gesichtspunkte und Vorteile der Erfindung gehen aus der nachfolgenden Beschreibung vorteilhafter Ausführungsbeispiele sowie aus den Patentansprüchen hervor.

Die Erfindung wird nachstehend im einzelnen beschrieben und anhand von verschiedenen Ausführungsbeispielen, die in der beigefügten Zeichnung dargestellt sind, erläutert.

In der Zeichnung ist dargestellt in:

Figur 1 eine vereinfachte perspektivische Darstellung einer Einrichtung zum Laden/ Entladen einer Magnetbandkassette, im Betrieb mit einem Bandlaufwerk;

Figur 2 eine vereinfachte Ansicht der Unterseite der Lade/Entlade-Einrichtung gemäß Figur 1, worin die Relativbewegung von ersten und zweiten Schwenkhebeln in zugehörigen Führungsschlitzen gezeigt ist

Figur 3 perspektivische die Kassetten-Lade/ Entlade-Einrichtung gemäß Figur 1, bei der die Schwenkhebel in ihrer Schließstellung und der Träger der Abwickelrolle in Ladestellung gezeichnet sind, worin letzterer die Bandkassette aufnehmen kann

Figur 4 eine Ansicht der Einrichtung von unten, im wesentlichen entlang der Linie 4—4 in Figur 3, die eine Führungsmutter in einer Stellung zeigt, in der sie die Schwenkhebel in der Schließstellung und den Träger der Abwickelrolle in seiner Ladestellung hält

Fig. 5 eine Ansicht der Kassetten-Lade/Entlade-Einrichtung von unten, ähnlich Figur 4, die die Führungsmutter auf einer Leitspindel etwas vorgerückt zeigt, wodurch die Schwenkhebel eine Halboffen-Stellung einnehmen und der Träger der Abwickelrolle um einen Teil der Bahn zur Antriebsrolle hin verschoben ist

Figur 6 eine Ansicht der Lade/Entlade-Einrichtung von unten, ähnlich Figuren 4 und 5, die die Schwenkhebel in der offenen Stellung und die Abwickelrolle in Umfangsflächenberührung mit der Antriebsrolle zeigt

Figur 7 zum Teil ein Explosionsdarstellung der Unterseite der Kassetten-Lade/Entlade-Einrichtung gemäß Figur 3

Figur 8 eine perspektivische Teilansicht der Einrichtung gemäß Figur 3 in vergrößertem Maßstab, worin auch die Führungsmutter sowie Teile der Leitspindel, der Führungsschiene und der Auswurfvorrichtung sichtbar sind

Figur 9 eine vereinfachte Draufsicht auf das Magnetlaufwerk gemäß Figur 3, worin die Kassette völlig geschlossen ist

Figur 10 eine vereinfachte Draufsicht, ähnlich Figur 9, mit ganz geöffneter Kassette die seitlich verschoben ist, so daß die Abwickelrolle mit der Antriebsrolle in Berührung steht

Figur 11 eine Ansicht der Lade/Entlade-Einrichtung im Schnitt, im wesentlichen entlang der Linie 11—11 in Figur 4 wobei die Kassette in der Einrichtung liegt und

Figur 12 eine Ansicht im Schnitt, ähnlich Figur 11, woraus die Funktion der Kassette ersichtlich ist.

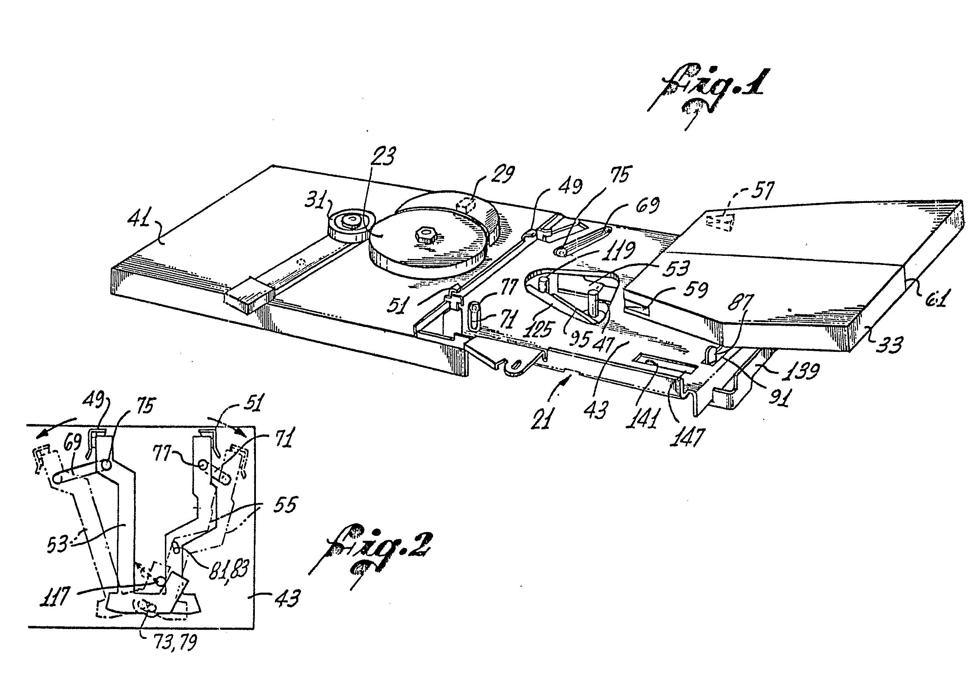

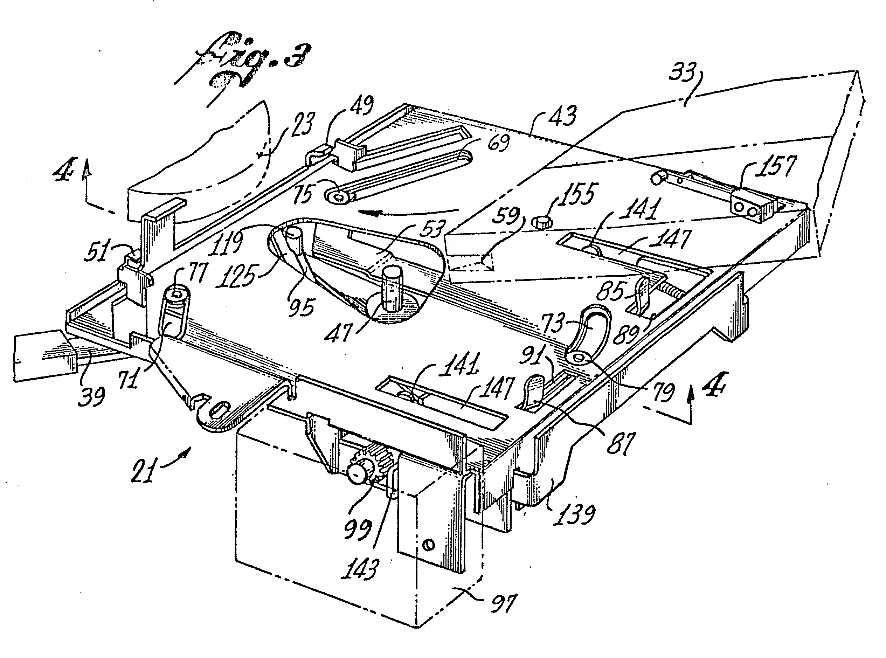

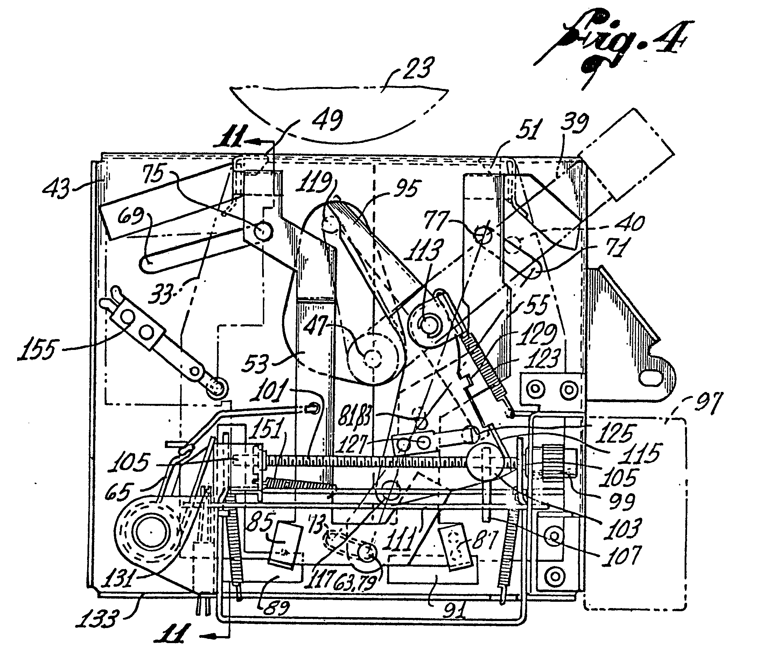

Figuren 1 und 3 zeigen die Kassetten-Lade/Entlade-Einrichtung 21. Die Einrichtung 21 wird hier in Verbindung mit einem Bandlaufwerk oder Bandtransport gezeigt, der die Antriebsrolle 23 enthält, die den Transport des Magnetbandes von der Abwickelrolle 27 am Aufzeichnungs/Wiedergabekopf 29 vorbei zur Aufwickelrolle 31 bewirkt.

Die Einrichtung 21 nimmt eine Schwenk-oder Klappkassette 33 auf, die die Abwickelrolle 27 enthält, wobei die Nabe 35 der Abwickelrolle 27 durch eine in der Unterseite der Kassette 33 vorhandene Öffnung ragt. Die Kassette 33 wird von Hand in die Einrichtung eingesetzt, wie in Figuren 1 und 3 gezeigt, so daß die Abwickelrolle 27 in eine Welle 47 am Ende eines Abwickelrollenträgers 39 einschnappt. Der Träger 39 ist an der Stelle 40 schwenkbar auf dem Chassis 41 der Bandtransportvorrichtung angeordnet. Nach dem Einsetzen liegt die Kassette 33 auf einer Auflageplatte 43, die bezüglich des Transportchassis feststeht, und eine hier nicht gezeigte Klappe läßt sich über der Kassette 33 schließen.

Der Mechanismus ist dann betätigbar, um die Abwickelrolle 27 aus ihrer Ladestellung oder Ruhelage, in der sie sich innerhalb der Kassette 33 befindet, in eine Arbeitsstellung zu überführen, in der die äußere Bandlage des Magnetbandes 24 auf der Rolle 27 an ihrer Umfangsfläche mit der Antriebsrolle 23 in Berührung kommt. Während sich die Abwikkelrolle 27 derartig an der Antriebsrolle 23 anlegt kann der Bandtransport das Band 24 von der Abwickelrolle 27 zur Aufwickelrolle 31 transportieren. Danach kann die Einrichtung 21 die Abwickelrolle 27 in die Kassette 33 zurückbefördern und gleichzeitig die Kassette 33 schließen, um sie schließlich aus der Einrichtung entnehmbar zu machen z.B. durch Auswerfen.

Wenn die Kassette 33 ganz in die Einrichtung 21 eingeführt ist, kommen die Öffnerlappen 49 und 51, die jeder am äußeren Ende eines ersten und zweiten Schwenkhebels 53 bzw. 55 vorgesehen sind, mit entsprechenden Schlitzen 57 und 59 in der Kassette 33 in Eingriff, wobei die Schlitze sich an der Wand der sich gegenüberliegenden Kassettenteile (in diesem Falle der Kassettenhälften) vorgesehen sind. Hierdurch wird eine, hier nicht sichtbare, interne Kassettenverriegelungsvorrichtung entriegelt, die die Kassette 33 normalerweise geschlossen hält. Die Kassette 33 ist dann in einer Lage zum Schwenken um die Gelenke 61 in ihre Öffnungsstellung.

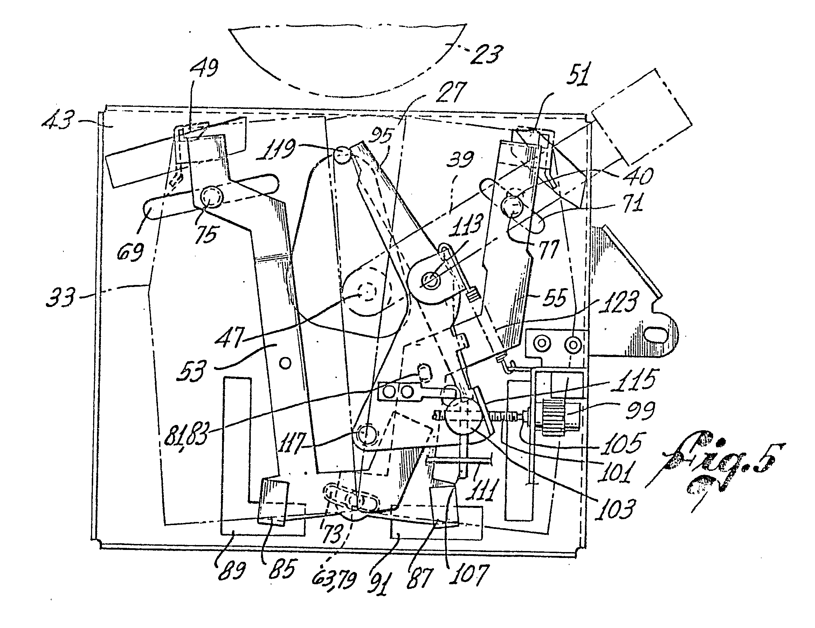

Die Figuren 4, 5 und 6 liefern ein bildliche Darstellungsfolge der Einrichtung 21, da sie die Kassette 33 öffnet und die Abwickelrolle 27 aus der Ladestellung in die Arbeitsstellung überführt. Der erste und zweite Schwenkhebel 53 und 55 sind an der Stelle 63 mittels eines Stiftes miteinander verbunden, und werden unter der Kraft einer Schwenkfeder 65 aus ihrer Schließstellung in eine Offenstellung auseinandergeschwenkt, wodurch die Kassette 33 geöffnet wird. Gleichzeitig bewegt der Abwickelrollenträger 39 unter dem Einfluß einer Transportfeder 67 die Abwickelrolle 27 in einer bogenförmigen Schwenkbewegung (Bewegungsbahn) aus der Lade- in die Arbeitsstellung.

Erfindungsgemäß führen die Schwenkhebel 53 und 55 zusammen eine Bewegung in Richtung einer Komponente der Schwenk-bewegung aus, während sie auseinander-geschwenkt werden, wobei die Mittellinie der in der Kassette 33 entstandenen Öffnung etwa dem Mittelpunkt der Abwickelrolle 27 nachgeführt wird. Auf diese Weise läßt sich die Abwickelrolle 27 bewegen oder vorschieben, ohne von der geöffneten Kassette 33 irgendwie behindert zu werden.

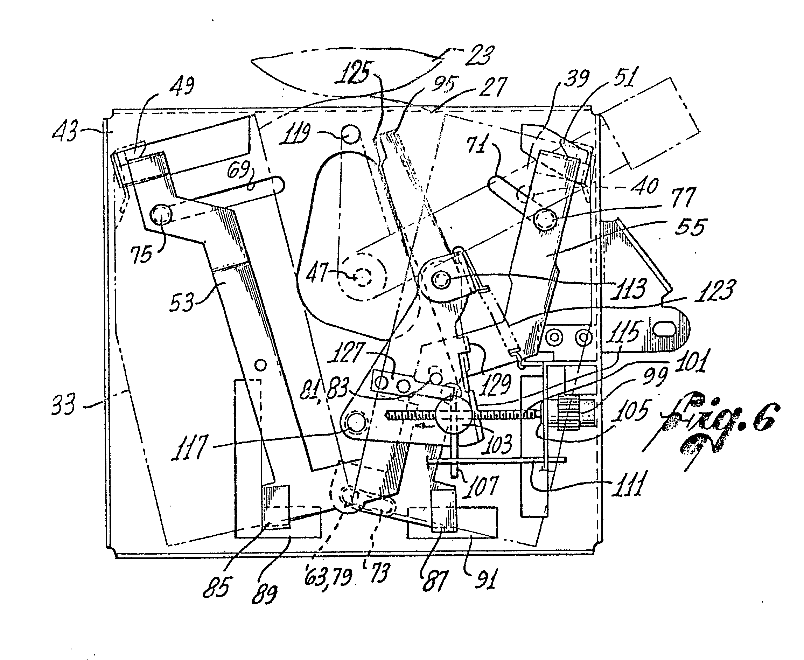

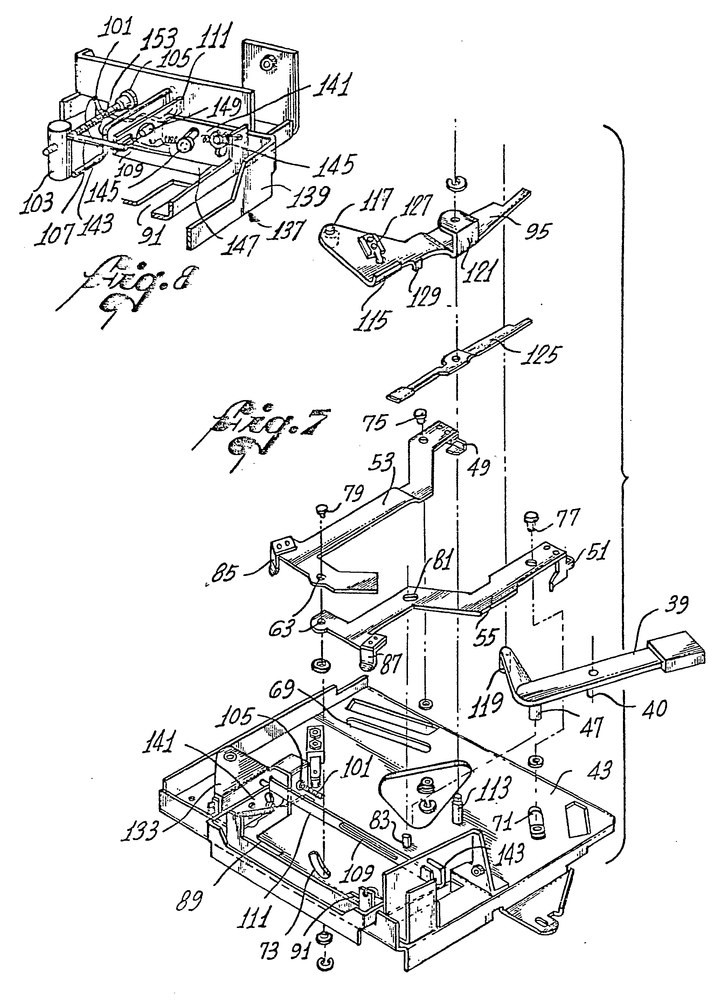

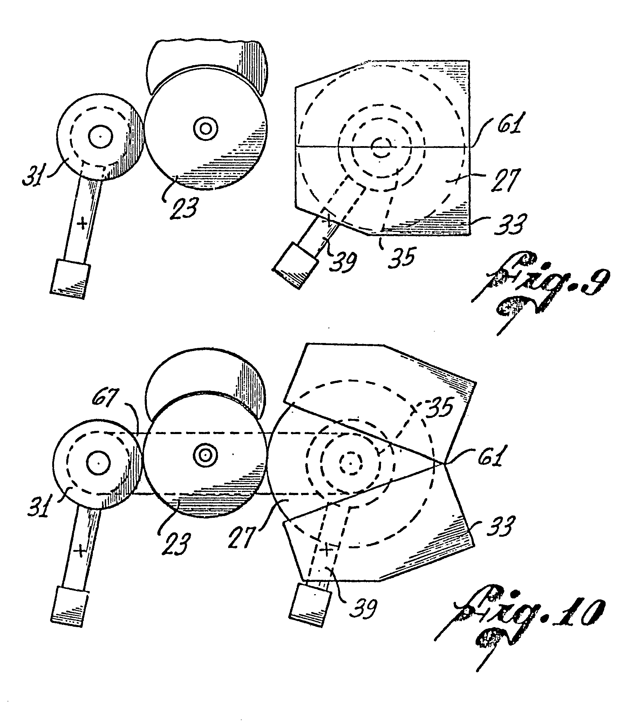

Wie am besten aus Figur 2 und Figur 7 ersichtlich ist, werden die genauen Wege, auf denen sich die beiden Schwenkhebel 53 und 55 bewegen, von einem ersten, einem zweiten und einem dritten Führungsschlitz 69, 71 bzw. 73 in der Auflageplatte 43, sowie durch einen vierten Führungsschlitz 81 am zweiten Schwenkhebel 55 bestimmt. Ein erster Stift 75 nahe dem rückwärtigen Ende des ersten Schwenkhebels 53 tritt in den ersten Schlitz 69 ein, und ein dritter Stift 79 am Hebelende 63 der Stiftverbindung des Hebels 53 tritt in den dritten Schlitz 73 ein, wodurch die Bewegung des Hebels 53 entsprechend eingeschränkt wird. Der dritte Stift 79 erstreckt sich ebenfalls durch das Hebelende 63 des zweiten Schwenkhebels 55 hindurch, um die beiden Schwenkhebel 53 und 55 miteinander zu verbinden.

Ein vierter Stift 83 an der Auflageplatte 43 greift in den vierten Schlitz 81 ein, der sich etwa im Mittelteil des zweiten Schwenkhebels 55 befindet. Entsprechend schränkt die aus einem vierten Stift 83 und einem vierten Schlitz 81 bestehende Anordnung in Verbindung mit der aus dem dritten Stift 79 und dem dritten Schlitz 73 bestehende Führungseinrichtung die Bewegung des zweiten Schwenkhebels 55 ein. Ein zweiter Stift 77, der sich nahe dem rückwärtigen Ende des zweiten Schwenkhebels 55 befindet, greift in den zweiten Schlitz 71 ein und trägt zur Versteifung des Hebels 55 bei.

Die aus dem ersten Schlitz 69 und dem ersten Stift 75 bestehende Anordnung sowie die aus dem zweiten Schlitz 71 und dem zweiten Stift 77 bestehende Anordnung dienen auch dazu, die Öffnerlappen 49 und 51 relativ zur Auflagefläche 43 auf vorgegebenem Niveau zu halten. Hierdurch wird sichergestellt, daß diese Öffner richtig liegen, um in entsprechende Schlitze 57 und 59 der Kassette 33 eingreifen und die Kassettenteile entriegeln zu können.

Wenn die Schwenkhebel 53 und 55 ihre Schließstellung einnehmen und die Kassette 33 somit geschlossen ist, befinden sich sämtliche Stifte 75, 77, 79 und 83 an einer ersten Gruppe von Enden entsprechender Schlitze 69, 71, 73 und 81 (s. Figur 4). Unter dem Einfluß der Schwenkhebelfeder 65 beginnen alle vier Stifte eine gesteuerte Bewegung entlang den entsprechenden Schlitzen durchzuführen (Figur 5). Alle vier Stifte erreichen gleichzeitig eine zweite Gruppe von Enden ihrer entsprechenden Schlitze, wodurch die Bewegung der Schwenkhebel 53 und 55 beendet wird (Figur 6). Die Enden der aneinandergekoppelten Schwenkhebel 53 und 55 führen daher eine seitliche Bewegung in Richtung auf die Schwenkhebelfeder 65 aus, während sich die rückwärtigen Hebelenden gleichzeitig voneinander fortbewegen. Das rückwärtige Ende des zweiten Schwenkhebels 55 legt dabei eine wesentlich größere Strecke zurück als das des ersten Schwenkhebels 53.

Die Schwenkhebel 53 und 55 weisen Federklammern 85 bzw. 87 auf, die durch Öffnungen 89 bzw. 91 in der Platte 43 hindurchragen, um die hinteren Teile der einander gegenüberliegenden Hälften der Kassette 33 zu erfassen. Die Klammern 85 und 87 wie die Öffnerlappen 49 und 51 erfassen die vorderen Teile der Kassettenhälften, umklammern sie und bewegen sie voneinander fort, im Einklang mit der Bewegung der Schwenkhebel 53 und 55. Auf diese Weise öffnet sich die Kassette 33 und führt gleichzeitig eine Bewegung in seitlicher Richtung aus, so daß die Mittellinie der in der Kassette 33 entstehenden Öffnung annähernd dem Mittelpunkt der Abwickelrolle 27 nachgeführt wird, während die Abwickelrolle 27 in einer bogenförmigen Bahn entlangbewegt wird, bis sie die Antriebsrolle 23 berührt.

Obwohl die hier beschriebene Bewegung der Schwenkhebel 53 und 55 und des Abwickelrollenträgers 39 unter dem Einfluß der Transportfeder 67 erfolgt, wird dieser Bewegungsablauf von einer Führungsmuttereinheit 93 mit Motorantrieb und einem Steuerhebel 95 gesteuert. Die Führungsmuttereinheit 93 enthält einen umkehrbaren Motor 97, eine aus Treibriemen und Untersetzungsgetriebe bestehende Einheit 99, eine Leitspindel 101 und eine Führungsmutter 103.

Wie am deutlichsten aus Figur 4 hervorgeht, ruht die Leitspindel 101 mit ihren Enden in Lagern 105, die an der Auflageplatte 43 befestigt sind, und wird von einem Motor 97 über das Getriebe 99 in Drehung versetzt. Die Führungsmutter 103 steht mit der Leitspindel 101 in Eingriff und wird von einem Finger 107 daran gehindert, der Drehung der Leitspindel 101 zu folgen, wobei dieser Finger 107 von der Führungsmutter 103 fortragt und durch einen Schlitz 109 in einer Führungsschiene 111, die sich parallel zur Leitspindel 101 erstreckt, hindurchragt. Die Drehung der Leitspindel 101 bewirkt daher, daß die Führungsmutter 103 sich entlang der Leitspindel bewegt. Der Steuerhebel 95 ist auf der Auflageplatte 43 um die Schwenkachse 113 schwenkbar gelagert.

Figur 4 zeigt die relative Lage, welche die Führungsmutter 103 und der Steuerhebel 95 einnehmen, wenn die Schwenkhebel 53 und 55 voll in die Schließstellung geschwenkt sind und die Abwickelrolle 27 sich in Ladestellung befindet. Die Führungsmutter 103 bestimmt die Lage des Steuerhebels 95 dadurch, daß sie an einem Flansch 115 dieses Hebels anstößt. Gleichzeitig liegt aber auch ein Stift 117, der am Steuerhebel 95 vorgesehen ist, an einem Fortsatz des ersten Schwenkhebels 53 an, der verhindert, daß die Schwenkhebelfeder 65 die Schwenkhebel 53 und 66 bewegt. Hierdurch werden die Hebel in ihrer Schließstellung korrekt positioniert. Zusätzlich liegt noch ein Zapfen 119 des Abwickelrollenträgers 39 an einem Abschnitt des Steuerhebels 95 an, um die Transportfeder 67 daran zu hindern, den Träger 39 in Richtung zur Antriebsrolle 23 hinzubewegen. Hierdurch wird die Welle 47 des Trägers 39 derart positioniert, daß sie mit dem Kern 35 der Abwickelrolle 27 in Eingriff gelangen kann.

Sowohl die Schwenkhebelfeder 65 als auch die Transportfeder 67 bewirken, daß der Flansch 115 des Steuerhebels 95 an der Führungsmutter 103 anliegt, während letztere sich auf der Leitspindel 101 entlangbewegt. Die Schwenkhebelfeder 65 stellt sicher, daß der Fortsatz des ersten Schwenkhebels 53 dauernd am Zapfen 117 des Steuerhebels anliegt, während die Transportfeder 67 den Trägerzapfen 119 dauernd am Steuerhebel 95 anliegen läßt. Beide Federkräfte bewirken eine Drehung des Steuerarms 95 um eine Schwenkachse 113, so daß der Kontakt zwischen Flansch 115 und Führungsmutter 103 aufrechterhalten bleibt. Der Steuerhebel 95 weist eine Abkröpfung 121 an seiner Schwenkachse 113 auf, die lediglich eine Drehung um die Schwenkachse 113 erlaubt und Drehungen um andere Achsen einen Widerstand entgegensetzt.

Während sich also die Führungsmutter 103 auf der Leitspindel 101 entlangbewegt (s. Figur 5), vollführt der Steuerhebel 95 automatisch eine Schwenkbewegung, um der Führungsmutter 103 zu folgen. Dies bewirkt, daß die Schwenkhebel 53 und 55 sich auseinanderbewegen und die Kassette 33 öffnen, und außerdem, daß der Abwickelrollenträger 39 die Abwickelrolle 27 in Richtung zur Antriebsrolle 23 vorschiebt. Nachdem die Führungsmutter 103 eine vorgegebene Strecke auf der Leitspindel 101 durchlaufen hat, haben die Schwenkhebel 53 und 55 das Ende ihrer Bewegung erreicht, und die Kassette 33 ist dann völlig geöffnet. Wird die Bewegung der Führungsmutter 103 fortgesetzt, setzt sich auch die Schwenkbewegung des Steuerhebels 95 fort, so daß der Steuerhebelstift 117 nicht mehr am Fortsatz des ersten Schwenkhebels 53 anliegt.

Während die Verschiebung der Führungsmutter 103 auf der Spindel 101 andauert, folgt der Steuerhebel 95 der Führungsmutter 103 nach unter dem Einfluß der Transportfeder 57.

Der Hebel 95 folgt der Führungsmutter 103 solange nach, bis die Abwickelrolle 27 mit ihrer Umfangsfläche die Antriebsrolle 23 berührt. Nach erfolgter Berührung bewirkt eine Steuerhebelfeder 123, daß der Steuerhebel 95 der Bewegung der Führungsmutter 103 auch weiterhin folgt und daß der Steuerhebel 95 nicht mehr am Trägerzapfen 119 anliegt (s. Figur 6). Die Forsetzung dieser Schwenkbewegung des Steuerhebels 95, die auch dann noch andauert, wenn die Abwickelrolle 27 bereits mit der Antriebsrolle 23 in Eingriff gelangt ist, wird benötigt, um zu vermeiden, daß der Hebel 95 den Bandtransportvorgang behindert, wenn das Magnetband 24 von der Abwickelrolle 27 zur Aufwickelrolle 31 gefördert wird.

Die Steuereinrichtungen umfassen auch eine Detektoreinheit zum Feststellen, ob Kontakt zwischen Abwickelrolle 27 und Antriebsrolle 23 besteht, so daß die Betätigung weiterer Einzelteile des Bandtransports entsprechend danach zeitlich gesteuert erfolgen kann. Im vorliegenden Fall enthält die Detektoreinheit einen Fühlerhebel 125 und ein Paar Berührungskontakte 127 für die Antriebsrolle 23.

Wie aus den Figuren 4 und 6 hervorgeht, ist der Fühlerhebel 125 schwenkbar an der Auflageplatte 43 angelenkt, an dem selben Schwenkpunkt 113 wie der Steuerhebel 95. Ähnlich wie der Steuerhebel 95 ist die Bewegung des Fühlerhebels 125 durch den Trägerzapfen 119 begrenzt und der Fühlerhebel 125 wird ebenso verschwenkt, daß er der Bewegung der Führungsmutter 103 auf der Leitspindel 101 nachfolgt. Sobald der Abwickelrollenträger 39 die Abwickelrolle 27 so weit vorgeschoben hat, daß sie in Berührung mit der Antriebsrolle 23 kommt, erlaubt der Trägerzapfen 119 keine weitere Schwenkbewegung des Fühlerhebels 125, um de Bewegung der Führungsmutter 103 zu folgen, und der Hebel 125 bleibt still stehen. Da jedoch der Steuerhebel 95 der Bewegung der Führungsmutter 103 unter dem Einfluß der Steuerhebelfeder 123 auch weiterhin folgt, wird der Steuerhebel 95 vom Fühlerhebel 125 weggeschwenkt. Wenn dann der Steuerhebel 95 eine kurze Strecke relativ zum Fühlerarm 125 bewegt wird, kommt ein Lappen 129 am Steuerarm 95 mit einem Abschnitt des Fühlerhebels 125 in Berührung, so daß dann der Fühlerhebel 125 zusammen mit dem Steuerhebel 95 eine weitere Schwenkbewegung durchführt. Die Berührungskontakte 127 für die Antriebsrolle 23 sind am Steuerhebel 95 und am Fühlerhebel 125 vorgesehen. Diese Kontakte 127 bilden mit dem Hebel 125 die erste Detektoreinheit. Die Kontakte werden in Position "geschlossen" gehalten, wenn die beiden Hebel 95 und 125 vereinigt sind und am Trägerzapfen 119 anliegen, springen jedoch auseinander (Position "offen"), sobald die Abwickelrolle 27 mit der Antriebsrolle 23 in Berührung kommt und der Steuerhebel 95 von den Steuerhebelfedern 123 veranlaß wird, eine weitere Schwenkbewegung vom Zapfen 119 fort durchzuführen. Der Zustand der Kontakte 127 wird von (nicht dargestellten, jedoch dem Fachmann geläufigen) Steuerschaltungen überwacht, die die Aufeinanderfolge der Betriebsweise der Antriebsrolle des Bandtransports bestimmen.

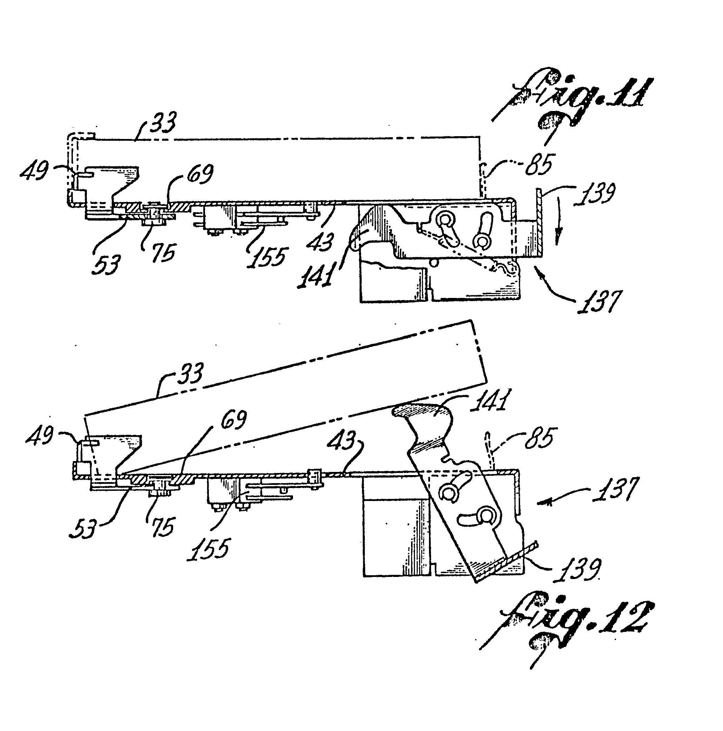

Die Lade/Entlade-Einrichtung 21 enthält auch eine zweite Detektoreinheit, mittels der fesgestellt wird, ob die Führungsmutter 103 eines der Enden der Leitspindle 101 erreicht hat, so daß der umkehrbare Motor 97 dann entsprechend "abgeschaltet" werden kann. Diese zweite Detektoreinheit umfaßt die schon früher erwähnte geschlitzte Führungsschiene 111, die, wie bereits festgestellt, auch verhindert, daß die Führungsmutter 103 die Drehung der Leitspindel 101 mitmacht und enthalten weiter ein Paar Führungsmutterkontakte 131. Wie in Figuren 7 und 8 dargestellt, erstreckt sich der Schlitz 109 in der Führungsschiene 111, der den seitlich an der Führungsmutter 103 hervorstehenden Finger 107 aufnimmt, über eine relativ große Strecke parallel zur Leitspindel 101. Wenn sich die Führungsmutter 103 einem der beiden Enden der Leitspindel 101 nähert, berührt der Finger 107 das jeweilige Ende des Schlitzes 108, woraufhin jede weitere Bewegung der Führungsmutter 103 die Schiene 111 in entsprechender Richtung in Bewegung setzt.

Die Führungskontakte 131, die am Befestigungsflansch 133 auf der Auflageplatte 43 sitzen, ragen durch eine Öffnung 135 der Führungsschiene 111 hindurch und sind normalerweise "offen". Eine Bewegung der Führungsschiene 111 in einer der beiden Richtungen "schließt" die Kontakte 131. Der Zustand der Kontakte 131 kann z.B. über die nicht dargestellten Steuerschaltungen überwacht werden, um den Motor 97 zu steuern.

Eine Umkehr der hier beschriebenen Arbeitsweise der Kassetten-Lade/Entlade-Einrichtung 21 kann einfach durch Umkehr der Drehrichtung des Motors 97 realisiert werden, so daß die Führungsmutter 103 sich nun auf der Leitspindel 101 in der entgegengesetzten Richtung bewegt. Die Führungsmutter 103 kommt dann am Flansch 115 am Steuerhebel 95 zur Anlage und zwingt den Steuerhebel 95, um seine Achse 113 zu schwenken. Der Steuerhebel 95 stößt dann am Trägerzapfen 119 an und führt die Abwickelrolle 27 in ihre ursprüngliche Lage innerhalb der Kassette 33 zurück, während der Steuerhebelzapfen 117 gleichzeitig am ersten Schwenkhebel 53 anschlägt, so daß die Hebel 53 und 55 zusammenschwenken und dadurch die Kassette 33 schließen. Sobald die Führungsmutter 103 sich dem Ende der Leitspindel 101 nähert, wird die geschlitzte. Führungsschiene 111 bewegt und die Führungsmutterkontakte 131 schließen und schalten hiermit den Motor 97 ab. Die Kassette 33 ist sodann Entnahme oder zum Auswurf aus der Einrichtung 21 bereit.

Wie am besten aus den Figuren 11 und 12 hervorgeht, kann die Kassette 33 aus der Lade/Entlade-Einrichtung 21 durch manuell betätigbare Auswurforgane 137 ausgestoßen werden. Die Auswurforgane umfassen eine schwenkbare Schiene 139 mit einem Paar damit einstückig ausgebildeter Auswurfhebel 141 und einer Sperrstange 143, welche die Betätigung der Shiene 139 nur dann erlaubt, wenn die Kassette 33 völlig geschlossen ist. Die Schiene 139 ist z.B. durch einen (nicht gezeigten) von Hand niederdrückbaren Knopf betätigbar, der die Schiene 139 in ihren Schwenklagern 145 dreht, wodurch die Hebel 141 durch Öffnungen 147 in der Auflageplatte 43 hindurchgreifen und die daraufliegende Kassette 33 anheben, um den Kern 35 der Abwickelrolle 27 von der Welle 47 zu lösen. Die Kassette 33 kann dann von Hand entnommen werden.

Die Sperrstange 143 kann durch Öffnungen 149 in den Auswurfhebeln 141 der Schiene 139 hindurchtreten, um zu verhindern, daß die Schiene 139 relativ zur Auflageplatte 43 schwenkt, wenn die Kassette 33 nicht ganz geschlossen ist. Eine Sperrfeder 151 hält die Sperrstange 143 nachgiebig in den Öffnungen 149 der Auswurfhebel 141 in Stellung. Die Sperrstange 143 besitzt einen abgekröpften Abschnitt 153, der durch den Finger 107 der Führungsmutter berührbar ist und zu einer Bewegung damit veranlaßbar ist. Wenn die Kassette 33 sich ihrer Position nähert, in der sie ganz geschlossen ist, hat die Führungsmutter 103 eine Lage, daß der Finger 107 zuerst den abgekröpften Abschnitt 153 berührt.

Eine weitere Bewegung der Führungsmutter 103 bewegt den Finger 107 an die Sperrstange 143, so daß dieselbe aus den Öffnungen 149 der Auswurfhebel 141 entfernt wird. Damit werden die Auswurfhebel 141 für die Kassette 33 frei.

Die Lade/Entlade-Einrichtung 21 umfaßt auch ein Paar Anwesenheitskontakte 155 für die richtig geladene Kassette 33 sowie ein Paar Aufzeichnungssperrkontakte 157, über die das Nichtvorhandensein eines Steges an der Kassette 33 feststellbar ist, wodurch angezeigt wird, daß auf dem Band der Kassette 33 keine Information aufgezeichnet werden soll. Die hier erwähnten Kontaktpaare können von (hier nicht näher zu erläuternden und nicht dargestellten) Steuerschaltungen überwacht werden, um die Aufeinanderfolge der Lade- und Entladeschritte der Einrichtung 21 und des Bandtransports geeignet zu steuern.

Aus obiger Beschreibung geht hervor, daß die Erfindung eine vorteilhafte Einrichtung zum Laden und Entladen einer Bandkassette zur Verwendung in einem Bandlaufwerkt bereitstellt. Gemäß der erfindungsgemäßen Einrichtung wird die Kassette geöffnet und die darin befindliche Abwickelrolle wird geschoben, so daß sie mit der Antriebsrolle des Bandlaufwerks in Berührung kommt, wobei sie die Kassette der Bewegungsbahn der Bandrolle folgend bewegt z.B. seitlich dazu bewegt wird, um eine mechanische Behinderung der bewegten Abwickelrolle durch die Kassette zu vermeiden.

Obwohl die Erfindung im einzelnen unter Bezugnahme auf eine vorteilhafte Ausführungsform beschrieben wurde, ist dem Fachmann klar, daß Änderungen im Rahmen des Fachwissens getroffen werden könne, ohne von der Erfindung abzuweichen.

**Patentansprüche**

1. Lade/Entlade-Einrichtung für eine Bandkassette, insbesondere eine Magnetbandkassette, die zum Betrieb mit einem Bandkassetten-Laufwerk geöffnet wird, wobei das Laufwerk eine Antriebsrolle (23), eine Aufwickelrolle (31), eine Abwickelrolle (27) sowie Öffnungseinrichtungen (49, 51) für die Kassette (33) umfaßt, und wobei zumindest die Abwickelrolle (27) auf einem schwenkbaren Träger (39) angeordnet ist und mittels einer Bewegungsvorrichtung die Abwickelrolle auf dem schwenkbaren Träger (39) zwischen der Ladestellung innerhalb der Kassette (33) und der Arbeitsstellung in Berührung mit der Antriebsrolle (23) entlang einer bogenförmigen Bahn bewegt wird, dadurch gekennzeichnet, daß eine Verlagerungsvorrichtung (53, 55) vorgesehen ist, mittels der die Kassette (33) auf dem Weg der Abwickelrolle (27) zwischen Ladestellung (Fig. 4) und Arbeitsstellung (Fig. 6) in senkrechter Richtung zur Verbindungsgeraden der Mittelpunkte der Abwickelrolle (27) in Ladestellung und der Antriebsrolle (23) verschiebbar ist.

2. Lade/Entlade-Einrichtung nach Anspruch 1, bei der die Kassette aus zwei auseinanderschwenkbaren Teilen besteht, zwischen denen nach Auseinanderschwenken in Draufsicht eine V-Öffnung entsteht, dadurch gekennzeichnet, daß die Verlagerungsvorrichtung (53, 55) mit Öffnungseinrichtungen (49, 51) versehen ist, die die Teile der Kassette (33) gleichzeitig mit der von der Abwickelrolle (27) durchgeführten Bewegung in die Arbeitsstellung in die Offenstellung auseinanderschwenken.

3. Lade/Entlade-Einrichtung nach einem oder beiden der Ansprüche 1 und 2, dadurch gekennzeichnet, daß die Kassette (33) mittels der Verlagerungsvorrichtung (53, 55) in einer im wesentlichen seitlichen Richtung relativ zu der zur Antriebsrolle (23) hinführenden Bewegungsrichtung verschoben wird, wodurch auch die V-Öffnung der Kassette (33) in Richtung der seitlichen Komponente der Bewegungsbahn der Abwickelrolle (27) parallel verschoben, wodurch ein mechanischer Kontakt zwischen Abwickelrolle (27) und Kassette (33) vermieden wird.

4. Lade/Entlade-Einrichtung nach den Ansprüchen 1 bis 3, dadurch gekennzeichnet, daß die Einrichtungen für die Kassettenöffnung (49, 51) und die Bewegungs- und Verlagerungsvorrichtungen (67 bzw. 53, 55) miteinander gleichzeitig koppelbar und gleichzeitig betätigbar sind.

5. Lade/Entlade-Einrichtung nach den Ansprüchen 1 bis 4, dadurch gekennzeichnet, daß der über die Verlagerungsvorrichtungen (53, 55) bewirkte Kassettenverschiebungsweg dem seitlichen Versatz der Abwickelrollenbewegungsbahn im wesentlichen angepaßt ist.

6. Lade/Entlade-Einrichtung nach Ansprüchen 1 und 2 und einem oder mehreren der Ansprüche 3 bis 5, dadurch gekennzeichnet, daß die Öffnungseinrichtung und die Verlagerungsvorrichtung für die Kassette (33) erste und zweite Schwenkhebel (53, 55) umfassen, die mit entgegengesetzten Teilen der Schwenkkassette (33) in Eingriff kommen und zur Öffnung der Kassette (33) relativ zueinander beweglich sind, wobei die Schwenkhebel (53, 55) jeweils ein Kopplungsende (63) aufweisen; und daß Vorrichtungen (73, 79) zur Kopplung der jeweiligen Enden der ersten und zweiten Schwenkhebel (53, 55) vorgesehen sind, wobei der erste und der zweite Schwenkhebel (53, 55) relativ zueinander aus einer geschlossenen Stellung (Fig. 4), in der die Kassette (33) geschlossen gehalten wird, in eine offene Stellung (Fig. 6), in der die V-Öffnung der Kassette (33) offen gehalten wird, bewegbar sind, wobei die entstandene V-Öffnung (Fig. 6, Fig. 10) gleichzeitig um einen vorgegebenen Weg in einer Richtung verschoben wird, senkrecht zur Verbindungsgeraden der Mittelpunkte der Abwickelrolle (27) und der Antriebsrolle.

7. Lade/Entlade-Einrichtung nach Anspruch 6, gekennzeichnet durch Führungseinrichtungen (69, 71, 81, 75, 77, 83), welche jeden dieser Hebel (53, 55) zwischen der Schließ- und Offenstellung der Kassette (33) einen vorgegebenen Weg entlangführen, sowie Steuereinrichtungen (93, 95) über die die ersten und zweiten Schwenkhebel (53, 55) automatisch zwischen der Schließ- und Offenstellung bewegbar sind.

8. Lade/Entlade-Einrichtung nach Anspruch 7, dadurch gekennzeichnet, daß die Steuereinrichtungen (93, 95) außerdem die auf dem Träger (39) angeordnete Abwickelrolle (27) zwischen ihrer Lage (Fig. 4) innerhalb der Kassette (33) und der Lage (Fig. 6), in der ihre Umgangsfläche mit der Antriebsrolle (23) in Berührung steht, bewegen können.

9. Lade/Entlade-Einrichtung nach einem oder beiden der Ansprüche 7 und 8, gekennzeichnet durch Steuereinrichtungen (93, 95), mittels der die jeweiligen aneinandergekoppelten Enden (63) der ersten und zweiten Schwenkhebel (53, 55) verschiebbar sind.

10. Lade/Entlade-Einrichtung nach den Ansprüchen 7 bis 9, dadurch gekennzeichnet, daß die Steuereinrichtungen eine motorgetriebene Führungsmuttereinheit (93) enthalten, die an einen Flansch (115) am Steuerhebel (95) anstößt, um diesen Hebel (95) zum Steuern zu bewegen.

11. Lade/Entlade-Einrichtung nach einem der Ansprüche 7 bis 10, dadurch gekennzeichnet, daß die Steuereinrichtungen Schwenkhebelfedern (65) enthalten, über die die ersten und zweiten Schwenkhebel (53, 55) in die Öffnungs- bzw. in die Schließstellung bewegbar sind, und daß Andruckfeder (67) vorgesehen sind, mittels der die Abwickelrolle (27) in ihre Arbeitsstellung bewegbar ist, und daß ein schwenkbarer Steuerhebel (95) vorgesehen ist, mittels dessen die ersten und zweiten Schwenkhebel (53, 55) steuerbar zwischen der Schließ- und Öffnungsstellung sind und die Abwickelrolle (27) zwischen ihrer Lade- und Arbeitsstellung bewegbar ist.

12. Lade/Entlade-Einrichtung nach Anspruch 9 und 11, dadurch gekennzeichnet, daß die ersten und zweiten Schwenkhebel (53, 55) sowie die Abwickelrolle (27) gleichzeitig mittels des schwenkbaren Steuerhebels (95) bewegbar sind, wobei der Steuerhebel (95) selbst über die Führungsmuttereinrichtungen (93) schwenkbar ist.

13. Lade/Entlade-Einrichtung nach Ansprüchen 9 bis 12, dadurch gekennzeichnet, daß die Steuereinrichtungen eine erste Detektoreinheit (125, 127) zum Feststellen der Anwesenheit der ersten und zweiten Schwenkhebel (53, 55) in der Öffnungsstellung (Fig. 6) und eine zweite Detektoreinheit (107, 111, 131) zur Erfassung des Umfangskontaktes zwischen Abwickelrolle (27) und Antriebsrolle (23) enthalten.

14. Lade/Entlade-Einrichtung nach einem oder mehreren der Ansprüche 1 bis 13, gekennzeichnet durch eine Auswurfvorrichtung (137), die mechanisch dur Organe (143, 139, 153) gesteuert, erst dann betätigbar sind, wenn die Kassette (33) geschlossen ist.

**Revendications**

1. Dispositif de chargement-déchargement d'une cassette de bande, en particulier d'une cassette de bande magnétique, qui est ouverte pour fonctionner avec un dispositif d'entraînement, ce dispositif d'entraînement comprenant un galet d'entraînement (23), un rouleau récepteur (31), un rouleau débiteur (27) ainsi que des moyens (49, 51) d'ouverture de la cassette (33), et au moins le rouleau débiteur (27) étant placé sur un support pivotant (39), et le rouleau débiteur sur le support pivotant (39) étant déplacé par des moyens d'entraînement jusqu'au contact avec le galet d'entraînement (23) le long d'un chemin courbe entre la position de chargement à l'intérieur de la cassette (33) et la position de fonctionnement, caractérisé par le fait qu'il est prévu des moyens de déplacement (53, 55) pouvant déplacer la cassette (33) sur le chemin du rouleau débiteur (27) entre la position de chargement (figure 4) et la position de fonctionnement (figure 6) perpendiculairement à la droite passant par les centres du rouleau débiteur (27) en position de chargement et du galet d'entraînement (23).

2. Dispositif de chargement-déchargement selon la revendication 1, dans lequel la cassette est formée de deux parties qui peuvent pivoter et s'écarter l'une de l'autre et forment entre elles, après écartement et vu de dessus, une ouverture un V, caractérisé par le fait que les moyens de déplacement (53, 55) sont pourvus de moyens d'ouverture (49, 51) qui écartent les parties de la cassette (33) en position ouverte en même temps que le mouvement effectué par le rouleau débiteur (27) pour venir en position de fonctionnement.

3. Dispositif de chargement-déchargement selon l'une des revendications 1 et 2 ou les deux, caractérisé par le fait que les moyens de déplacement (53, 55) déplacent la cassette (33) dans une direction sensiblement latérale par rapport à la direction d'entraînement conduisant au galet d'entraînement (23), grâce à quoi l'ouverture en V de la cassette (33) est aussi déplacée dans la direction de la composante latérale de la trajectoire du rouleau débiteur (27), ce qui évite un contact mécanique entre le rouleau débiteur (27) et cassette (33).

4. Dispositif de chargement-déchargement selon les revendications 1 à 3, caractérisé par le fait que les moyens (49, 51) d'ouverture de la cassette et les moyens d'entraînement et de déplacement (67 et 53, 55) peuvent être accouplés simultanément et actionnés simultanément.

5. Dispositif de chargement-déchargement selon les revendications 1 à 4, caractérisé par le fait que le chemin de déplacement de la cassette provoquée par les moyens de déplacement (53, 55) est sensiblement adapté au décalage latéral de la trajectoire du rouleau débiteur.

6. Dispositif de chargement-déchargement selon les revendications 1 et 2 et une ou plusieurs des revendications 3 à 5, caractérisé par le fait que les moyens d'ouverture et les moyens de déplacement de la cassette (33) comprennent des premiers et deuxièmes leviers pivotants (53, 55) qui viennent en prise avec des parties opposées de la cassette pivotante (33), sont mobiles l'un par rapport à l'autre pour l'ouverture de la cassette (33) et présentent chacun une extrémité d'accouplement (63), et qu'il est prévu des moyens (73, 79) d'accouplement des extrémités respectives des premiers et deuxièmes leviers pivotants (53, 55), les premiers et deuxièmes leviers pivotants (53, 55) étant mobiles l'un rapport à l'autre d'une position fermée (figure 4) dans laquelle la cassette (33) est maintenue fermée à une position ouverte (figure 6) dans laquelle l'ouverture en V de la cassette (33) est maintenue ouverte, l'ouverture en V formée (figure 6, figure 10) exécutant en même temps un déplacement d'amplitude déterminée dans une direction perpendiculaire à la droite passant par les centres du rouleau débiteur (27) et du galet d'entraînement.

7. Dispositif de chargement-déchargement selon la revendication 6, caractérisé par le fait qu'il comporte des moyens de guidage (69, 71, 81, 75, 77, 83) qui guident chacun de ces leviers (53, 55) le long d'un chemin déterminé entre les positions de fermeture et d'ouverture de la cassette (33), ainsi que des moyens de commande (93, 95) qui peuvent entraîner automatiquement les premiers et deuxièmes leviers pivotants (53, 55) entre les positions de fermeture et d'ouverture.

8. Dispositif de chargement-déchargement selon la revendication 6, caractérisé par le fait que les moyens de commande (93, 95) peuvent en outre entraîner le rouleau débiteur (27) placé sur le support (39) entre sa position (figure 4) à l'intérieur de la cassette (33) et la position (figure 6) dans laquelle sa surface périphérique est en contact avec le galet d'entraînement (23).

9. Dispositif de chargement-déchargement selon l'une des revendications 7 et 8 ou les deux, caractérisé par le fait qu'il comporte des moyens de commande (93, 95) qui peuvent déplacer les extrémités (63) accouplées des premiers et deuxièmes leviers pivotants (53, 55).

10. Dispositif de chargement-déchargement selon les revendications 7 à 9, caractérisé par le fait que les moyens de commande comportent un système à écrou de guidage (93) commandé par moteur qui est en butée contre une aile (115) du levier de commande (95) pour déplacer ce levier (95) pour la commande.

11. Dispositif de chargement-déchargement selon l'une des revendications 7 à 10, caractérisé par le fait que les moyens de commande comportent des ressorts de leviers pivotants (65) qui entraînent les premiers et deuxièmes leviers pivotants (53, 55) en position d'ouverture et en position de fermeture, et qu'il est prévu des ressorts de pression (67) qui entraînent le rouleau débiteur (27) dans sa position de fonctionnement, et qu'il est prévu un levier de commande pivotant (95) qui pilote les premiers et deuxièmes leviers pivotants (53, 55) entre les positions de fermeture et d'ouverture et déplace le rouleau débiteur (27) entre ses positions de chargement et de fonctionnement.

12. Dispositif de chargement-déchargement selon les revendications 9 et 11, caractérisé par le fait que les premiers et deuxièmes leviers pivotants (53, 55) ainsi que le rouleau débiteur (27) sont mus en même temps par le levier de commande pivotant (95), dont le pivotement est produit par le système à écrou de guidage (93).

13. Dispositif de chargement-déchargement selon les revendications 9 à 12, caractérisé par le fait que les moyens de commande comprennent un premier dispositif détecteur (125, 127) destiné à déterminer la présence des premiers et deuxièmes leviers pivotants (53, 55) dans la position d'ouverture (figure 6) et un deuxième dispositif détecteur (107, 111, 131) destiné à détecter le contact périphérique entre le rouleau débiteur (27) et la galet d'entraînement (23).

14. Dispositif de chargement-déchargement selon une ou plusieurs des revendications 1 à 13, caractérisé par le fait qu'il comporte un dispositif éjecteur (137) commandé mécaniquement par des organes (143, 139, 153) qui ne peuvent être actionnées que lorsque la cassette (33) est fermée.

**Claims**

1. A loading/unloading apparatus for a tape cassette, especially a magnetic tape cassette, which is opened for operation with a tape transport device, the latter comprising a drive capstan (23), a take-up reel (31), a supply reel (27) and opening means (49, 51) for the cassette (33), at least the supply reel (27) being mounted on a pivotal carriage (39), and the supply reel on the pivotal carriage (39) being moved by moving means along an arcuate path between its load position within the cassette (33) and its operative position in contact with the drive capstan (23), wherein displacement means (53, 55) are provided, by means of which the cassette (33) can be displaced, as the supply reel (27) moves between its load position (Fig. 4) and its operative position (Fig. 6), at right angles to the line connecting the centre of the supply reel (27) in its load position, and the centre of the drive capstan (23).

2. A loading/unloading apparatus as claimed in claim 1, in which the cassette comprises two parts which can pivoted apart and between which, in plan view, a V-shaped opening is formed after they have been pivoted apart, wherein the displacement means (53, 55) are provided with opening means (49, 51) which pivot open the parts of the cassette (33) simultaneous to the movement of the supply reel (27) to its operative position.

3. A loading/unloading apparatus as claimed in one or both of claims 1 and 2, wherein the cassette (33) is displaced by the displacement means (53, 55) in a direction essentially lateral to the direction toward the drive capstan (23), as a result of which the V-shaped opening of the cassette (33) is also shifted in the direction of the lateral component of the movement of the supply reel (27), whereby physical contact between the supply reel (27) and the cassette (33) is prevented.

4. A loading/unloading apparatus as claimed in claims 1 to 3, wherein the cassette opening means (49, 51) and the moving and displacement means (67 and 53, 55 respectively) can be simultaneously coupled together and simultaneously actuated.

5. A loading/unloading apparatus as claimed in claims 1 to 4, wherein the lateral displacement of the cassette effected by the displacement means (53, 55) substantially matches the lateral component of the movement of the supply reel.

6. A loading/unloading apparatus as claimed in claims 1 and 2 and one or more of claims 3 to 5, wherein the opening means and the displacement means for the cassette (33) comprise first and second pivot arms (53, 55) which engage the opposite parts of the hinged cassette (33) and can be moved relative to one another to open the cassette (33), the pivot arms (53, 55) each having a coupled end (63); means (73, 79) are provided for coupling together the respective ends of the first and second pivot arms (53, 55), the first and second pivot arms (53, 55) being movable relative to each other from a closed position (Fig. 4), in which the cassette is held closed, to an open position (Fig. 6), in which the V-shaped opening of the cassette is kept open, the V-shaped opening formed being simultaneously moved a predetermined distance in a direction at right angles to the line connecting the centre of the supply reel (27) and the centre of the drive capstan.

7. A loading/unloading apparatus as claimed in claim 6, wherein there are provided guide means (69, 71, 81, 75, 77, 83) which guide each of the said arms (53, 55) along a predetermined path between the closed and open positions of the cassette (33); and control means via which the first and second pivot arms (53, 55) can be automatically moved between the closed and open positions.

8. A loading/unloading apparatus as claimed in claim 7, wherein the control means (93, 95) can also move the supply reel (27), mounted on the carriage (39), between its position (Fig. 4) within the cassette (33) and the position (Fig. 6) in which its peripheral surface is in contact with the drive capstan (33).

9. A loading/unloading apparatus as claimed in one or both of claims 7 and 8, wherein the control means (93, 95) can displace the respective coupled ends (63) of the first and second pivot arms (53, 55).

10. A loading/unloading apparatus as claimed in claims 7 to 9, wherein the control means include a motor-driven lead nut assembly (93) that abuts a flange (115) on the control arm (95) to controllably move this arm (95).

11. A loading/unloading apparatus as claimed in any of claims 7 to 10, wherein the control means include pivot arm springs (65) which urge the first and second pivot arms (53, 55) into the open or closed position, and wherein biassing springs (67) are provided for urging the supply reel (27) into its operative position, and a pivotable control arm (95) is provided for controllably moving the first and second pivot arms (53, 55) between the closed and open positions and the supply reel (27) between its load and operative positions.

12. A loading/unloading apparatus as claimed in claims 9 and 11, wherein the first and second pivot arms (53, 55) and the supply reel (27) can be simultaneously moved by the pivotable control arm (95), the control arm (95) itself being pivotable by the lead nut assembly (93).

13. A loading/unloading apparatus as claimed in claims 9 to 12, wherein the control means include first detection means (125, 127) for detecting the presence of the first and second pivot arms (53, 55) in the open position (Fig. 6) and second detection means (107, 111, 131) for detecting the surface engagement of the supply reel (27) with the drive capstan (23).

14. A loading/unloading apparatus as claimed in one or more of claims 1 to 13, wherein ejection means (137), controlled mechanically by members (143, 139, 153), can only be actuated if the cassette (33) is closed.

*fig.1*

*fig.2*

0002479

Fig.3

Fig. 4

0 002 479

*Fig.5*

_Fig. 6_

*Fig. 8*

*Fig. 7*

Fig. 9

Fig. 10

Fig.11

Fig.12